# EUROPEAN PATENT APPLICATION

(11) **EP 4 811 844 A1**
(43) Date of publication of application: **23.09.2026**
(21) Application number: 25382253.0
(22) Date of filing: 18.03.2025
(51) Int. Cl.: H04W 12/30, H04W 12/04, H04W 4/50, H04W 8/18, H04W 8/20

(54) **METHOD, CONFIGURATION PROGRAM, SECURITY PROGRAM DATASET, COMPUTER-READABLE DATA CARRIER, HARDWARE SECURITY MODULE, AND SERVER DEVICE WITH SEQUENCE KEY**

(71) Applicant: Giesecke+Devrient Mobile Security Germany GmbH, 81677 München (DE)
(72) Inventor: Perarnau, Xavier, 08820 El Prat de Llobregat (Barcelona) (ES)
(74) Representative: LKGLOBAL Partnerschaftsgesellschaft mbB

(57) **Abstract**

A method, as well as a corresponding configuration program (10), a security program dataset (10c), a computer-readable data carrier (11, 12, 13), a hardware security module (4), and a server device (3) are provided, wherein for transforming data objects (D) for configuring secure elements (6), such as eUICCs, of user devices (5) intended to be issued to users and allowing secure accesses involving a trusted entity (T), in particular for accessing telecommunication networks, the method comprising the steps of providing a hardware security module (4) for a server device (3) configured to transform a data input of data elements (F) to a data output of data objects (D) configured to operate the secure elements (6); and providing a sequence key (Φ) configured to allow execution of a transformation sequence (W) in the hardware security module (4), wherein the transformation sequence (W) comprises at least two transformation operations (V) performed on the data elements (F) in the course of generating the data objects (D).

## Description

### Technical Field

The present disclosure relates to the field of configuring user devices, for example, smart cards, transaction cards, personal mobile devices or Internet-of-Things (IoT) devices, or alike, for being securely operated by an authorized user, for instance for conducting secure transactions and/or participating in communication networks. In particular, the present disclosure relates to a method of transforming data objects for configuring secure elements, such as eUICCs, of user devices intended to be issued to users and allowing secure accesses involving a trusted entity, in particular for accessing telecommunication networks, a configuration program for configuring secure elements of user devices, in particular for secure operation involving a trusted entity, a security program dataset for a hardware security module of a server device, in particular a security server providing a secure location for allowing secure operations involving a trusted entity, a computer-readable data carrier, a hardware security module for a server device, in particular a security server providing a secure location or allowing secure operations involving a trusted entity, and a server device, such as a security server providing a secure location, in particular for al-lowing secure operations involving a trusted entity.

### Background of the Invention

User devices, such as smart cards (e.g., so-called java cards), identification cards, transaction cards, personal mobile devices or IoT-devices, are known from the prior art. The user devices are commonly configured to employ electronic subscriber profiles authenticating a user for secure transactions or communicating on telecommunication networks, e.g., mobile networks. Such user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more of the electronic subscriber profiles that may allow the user devices to connect to one or more mobile networks. A subscriber profile (e.g., an eSIM profile) may be generated by a mobile network operator (MNO) and may be stored, e.g., downloaded to a mobile user device. The subscriber profile may then be installed on a secure element of the user device and used for communication over a corresponding mobile network by the user device.

The secure elements are run by operation systems (OS) containing software and/or firmware for operating the secure elements. Those OS need to be up to date in order to provide full and reliable functionality of the secure elements. An OS Update is especially relevant with the deployment of embedded Secure Elements (eSE) in the form of eUICC or alike. As opposite of traditional pluggable SIMs that can be inserted and removed, eSEs are soldered into user devices, making it very difficult (or costly) to replace them during the life cycle of the user devices.

Consequently, there is a need for so-called firmware-upgrades and/or updates that allow to modify the content of the eSE in the event that it has to be kept up to date and/or a technical issue has to be fixed. For example, one possible reason for that firmware has to be kept up to date is if a related standard, such as a GSMA specification, relating to the user device changes or is being newly implemented. In any case, such updates can be carried out with the help of an Open Firmware Loader (OFL), or alike, which is specifically designed software component in charge of firmware upgrades including OS updates in the secure element. The need to be able to update the software for certain SE/TRE has generated many different approaches worldwide. In some solutions, there is a separate entity (ITL - Image Trusted Loader, OFL, Update Agent) which is kept in charge in the SE/TRE while the full OS, or only part of it, is changed. The states of the SE/TRE are then not really defined according to any global entity.

WO 2023 274579 A1 relates to methods, apparatus, and systems for implementing an encryption scheme for providing a software image to a secure element. The software image is converted into a sequence of ciphered blocks, which is protected with an authentication tag to obtain a sequence of protected blocks, which are then transmitted to an update agent on the secure element. The steps of converting the software image into a sequence of ciphered blocks and protecting the sequence of ciphered blocks with an authentication tag are implemented by an authenticated encryption function using a same block cipher.

WO 2023 274578 A1 relates to a method, a data structure, and an update agent for implementing a scheme for downloading an operating system image onto a secure element. The update agent receives from an external device an installation package for installing an operating system onto the secure element. The update agent requests control of the secure element and loads the operating system received with the installation package into the secure element, after which control of the secure element is transferred to the operating system.

WO 2023 274577 A1 relates to a method, an update agent and an off-card entity for implementing an authentication scheme for providing a software image to a secure element. An installation package comprising a package binding function for linking the installation package to the secure element, a manifest, a manifest signature generated using a block-cipher algorithm, and a software image is received at an update agent within the secure element. The update agent implements an authentication and integrity scheme by verifying various signatures contained within the installation package and install the software image in case of successful authentication and integrity verification.

Furthermore, the subscriber profile, i.e. a structure and format thereof, as well as the respective diversified data, including security credentials, etc., should be adapted to the respective OS. According to the prior art, there are a number of ways of installing the subscriber profile on a SE/TRE, which may include providing the diversified and/or personalized data to the SE/TRE. In general, this can be done either via normal commands communicating with the OS or in other ways during production in factory, for example, by a so-called "Diversified Data Injection" referring to a deployment of different data for each TRE in factory before issuance of the SE/TRE to a customer.

EP 4 468 653 A1 describes a method for provisioning an xUICC, destined to host one or more profiles for communication in a mobile communication network, comprising the steps: Providing in the xUICC an OS load key, as a root of trust (RoT); Loading and installing to the xUICC an xUICC operating system, xUICC OS, encrypted with the OS load key for the loading, the xUICC OS being designed to enable directly or indirectly receiving and installing in the xUICC one or several eSIM profiles; Loading and storing to the xUICC xUICC unique data, encrypted with the OS load key for the loading, the xUICC unique data comprising at least one GSMA certificate, certifying the xUICC with the installed xUICC as certified for receiving and installing in the xUICC eSIM profiles; preparing the xUICC for a later downloading and installing of downloading and installing an eSIM profile, encrypted with the OS load key for the downloading, to the xUICC prepared with previous steps, wherein the xUICC operating system, xUICC, of step, the xUICC unique data of step, and the eSIM profiles of step are encrypted with the same OS load key provided in step.

EP 4 124 980 A1 relates to a method for personalizing a software, in particular an operating system OS, in a SE, comprising the steps of loading a software image into the memory of the SE; loading a software personalization record comprising personalization data into the memory of the SE; and personalizing the loaded software image using the software personalization data. Personalization of the software image is initiated by an internal agent of the SE. Preferably, initiation personalization of the software image by the internal agent is triggered by a trigger event that is detected by the internal agent, the trigger event being unrelated to software personalization.

EP 4 429 292 A1 refers to a method for generating at least one profile, for provisioning the profile to an eUICC designed to be hosted in a device, including the steps: Provide profile generation data, including static profile data for generating a profile container and dynamic; generate a profile, and a dynamic-data description file indicating content and storage location of at least the dynamic profile data in the profile; Create, in the eUICC at least one profile container, provide the profile and the dynamic-data description file to a Dynamic Converter, and at the Dynamic Converter, with support of the dynamic-data description file, extract the dynamic profile data from the profile, for later transferring the extracted dynamic profile data to the eUICC, and installing the transferred extracted dynamic profile data into the profile container previously created.

EP 4 124 979 A1, in a first aspect, relates to a method for updating an installed software, in particular an operating system, in a secure element. The method comprises the steps of providing an update agent in the secure element; securing specific data required for operating the installed software in a memory of the update agent; loading a software image into the secure element, the software image representing an update of the installed software; and making the software image operable by the secured specific data. According to further aspects, the present invention relates to a respective secure element, an update agent, and a computer-program product in relation to other aspects of the invention.

EP 4 124 976 A1 relates to an update agent, a secure element containing the update agent, and a method for loading and personalizing a software in the secure element. In a first step, an update agent is loaded into the secure element. In a further step, software personalization data is loaded into the secure element, and stored in the update agent. Subsequently, the software is loaded into the secure element and personalized using the software personalization data stored in the update agent.

Methods for configuring and upgrading/updating secure elements of user devices, involving OS updates and the provision of user profiles, including diversified and/or personalized data, as described above, may not fully satisfy all requirements regarding their deployability and availability on the one hand, as well as functional safety and security on the other hand. In particular the provision of diversified and/or personalized data, such as in "Diversified Data Injection" generally happens in factory during production and is generally blocked afterwards, such as after when the SE/TRE is issued to a customer. Many of the data diversified and/or personalized here cannot be provided via common commands after issuance for different reasons.

In general, it is desirable that both, the OS, and the secure elements have the same origin and preferably same state of development in order to ensure functional safety and security. However, due to deployability and availability restrictions, it may not be always assured that the OS, as well as the secure elements have the same origin, corresponding versions, or meet certain future requirements, especially if an implementation of a new specification or standard for operating the user devices is expected to be issued during lifetime of the user device and/or respective secure element. This may limit the functionality, especially a spectrum of (future) capabilities, of the user device, may compromise functional safety and security when operating user devices, or may even lead to that the devices cannot be configured properly, keeping in mind that not only the OS but also related data structures including diversified data can be affected by updating procedures.

Furthermore, when the provisioning of certain pieces of data, such as diversified data, is restricted to a very early phase of the production process, it places heavy restrictions on timelines and planning. This potentially complicates certain aspects of production, such as stock accumulation, especially if data requirements cannot be well defined in advance. Production may be further complicated when different parties are involved in the production process, for example, if one party produces the SE/TRE as well as respective personalized software images, and another party provides the OS, while a third one may be in charge of the diversified data. In such a case, special processes are required for data provisioning within each of the factories involved. Even though, such processes may be partially covered by in-factory personalization functionalities as known from the prior art, nevertheless, different provisioning methods for different factories and manufacturers may occur, which may in turn again compromise certain requirements regarding deployability and availability of SE/TRE on the one hand, as well as their functional safety and security on the other hand.

### Summary of the Invention

It may be thus seen as an object to provide a way to handle secure elements, their OS, user profile datasets and respective diversified data in a way that a future proof functional spectrum, safety and security may be assured, while not compromising deployability, availability, and/or data integrity. In particular, it may be seen as an object to facilitate providing data objects to secure elements in a way, that on the one hand, their personalization can be carried out at remote premises or by third parties, while on the other hand, a required level of control by trusted entities and/or standardization bodies over the personalization process is maintained. These objects are at least partly achieved by the subject-matter of the independent claims.

According to an aspect, a method of transforming data objects for configuring secure elements, such as eUICCs, of user devices intended to be issued to users and allowing secure accesses in-volving a trusted entity, in particular for accessing telecommunication networks, is provided, the method comprising the steps of providing a hardware security module for a server device configured to transform a data input of data elements to a data output of data objects configured to operate the secure elements; and providing a sequence key configured to allow execution of a transformation sequence in the hardware security module, wherein the transformation sequence comprises at least two transformation operations performed on the data elements in the course of generating the data objects.

According to an aspect, a configuration program for configuring a user device, in particular for secure operation involving a trusted entity, is provided, wherein the configuration program comprises instructions which, when the configuration program is executed by a server device, cause the server device to carry out a corresponding method.

According to an aspect, a security program dataset for a hardware security module of a server device, in particular a security server providing a secure location for allowing secure operations involving a trusted entity, is provided, the security program dataset comprising a at least parts of a corresponding configuration program and/or configured to carry out a corresponding method. An operating system dataset for a secure element of a user device, such as an eUICC, may be provided, the operating system dataset may comprise at least parts of a corresponding configuration program and/or may be configured to carry out a corresponding method and/or to interact with a respective configuration program and/or security program dataset.

According to an aspect, a computer-readable data carrier is provided, having stored thereon a corresponding configuration program according and/or a corresponding security program dataset.

According to an aspect, a hardware security module for a server device, in particular a security server providing a secure location for allowing secure operations involving a trusted entity, is provided, wherein the hardware security module is configured to carry out a corresponding method, comprises a corresponding configuration program, a corresponding security program dataset, and/or a corresponding computer-readable data carrier.

According to an aspect, a server device is provided, such as a security server providing a secure location, in particular for allowing secure remote operation of user devices involving a trusted entity, wherein the server device is configured to carry out a corresponding method, comprises a corresponding configuration program, a corresponding security program dataset a corresponding computer-readable data carrier, and/or a corresponding hardware security module.

The secure element may be understood as a tamper resistant element (TRE). A diversification program dataset may provide a and/or be provided as a diversified data manager (DDM) for managing the diversified data. Additionally, an installation program dataset can be provided for managing installation process, such as installing and/or updating an operating system dataset or respective update data subsets. The installation program dataset may implement an installation state machine which can be located in the installation program dataset and configured to provide information regarding a status of the installation process. Both, the diversification program dataset and the installation program dataset may be integrated as data subsets into a customization dataset, such as a firmware suite allowing for customization of data on the secure element.

A complete operating system update dataset and/or subsets thereof comprising at least one update data subset may be provided for at least partially replacing the previously installed operating system dataset. An application program dataset may be provided as a part of an operating system dataset of the secure element and/or may be configured to interact with the operating system dataset. A complete operating system dataset and/or subsets thereof may comprise the application program dataset. The operating system dataset and/or application program dataset may be configured to read, write, delete, manage and/or administer any kind of data object stored on the secure element and such are the user device. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

The sequence key can be understood as an attributeless key, i.e., it does not have any attribute linking it to a specific transformation to be performed by the hardware security module (HSM). On the contrary, the sequence key can be used for triggering the transformation sequence as a chain of several actions to be performed rather in series than in parallel to each other. The transformation sequence can be understood as a transformation chain of subsequent transformations performed on the data elements and respective intermediate data constructs involved in generating the data objects.

In contrast to that, keys commonly used by an HSM possess attributes which describe the operation the respective key is used for (Encrypt, Decrypt, etc.). In an untrusted environment, an attacker, if gained access to the machine, could use such keys by using the authentication data (e.g., a PIN code). The proposed solution thus allows for delivering an HSM that can do custom operations with keys, without the party having authorized control over the premises where the HSM is located being able to use the sequence keys for regular operations involving standard attributes, such as Encrypt, Decrypt, etc. By not having any attributes, the HSM can reject any standard operations while still being able to be used within custom firmware modules for single or chained operations. Modification of the key current attributes can also be prevented as if they were read-only. This is to prevent a party which is not certified as a trusted entity and/or by a standardization body to make the sequence key usable. Once the key is imported into the HSM, it remains preferably unchangeable over its lifetime.

The proposed solution allows for providing new and/or updated data setups, including diversified data, to secure elements, without the need to necessarily provide this data at the premises or through the premises of a trusted entity. This enables a flexible personalization and provision of secure elements. Thus, the secure elements do not require to be provided with any of the diversified data before leaving the factory and can be reconfigured with diversified data at a later point of time, for example, by a manufacturer of user devices, by an MNO, or alike, for example in line with PKCS #11 Cryptographic Token Interface Base Specification Version 2.40.

In case certain data have to be sent to the HMS, they can be decrypted by the respective server using the sequence key, followed by signature verification and, in the premises where the HSM is located. The data can then be re-encrypted for the in intended secure element, e.g., an eUICC. If, by contrast to that, common keys with attributes would be provided to the HSM, by knowing the PIN the respective party could alter the flow, skip signature-verification and still produce valid inputs. The security program dataset, for instance, in the form of a firmware module, can be created that leverages use of the sequence keys in that transformation operations, such as decrypt, verify, re-encrypt, etc. are exclusively performed inside the security program dataset without the party having control over the HSM being able to misuse those sequence keys.

Thus, the proposed solution allows for sensible data to be provisioned in a certified space, such as a secure storage location of the secure element, by means of the security program dataset and a respective complementary data component in the secure element, e.g. in the form of a Diversified Data Manager (DDM). Consequently, the proposed solution is compatible with previously known data provisioning processes, such as defined by the GSMA, which commonly restricts some data provisioning to certain environments. For example, a batch of secure elements can be provided with the diversification program dataset at a production facility, then be provided to a manufacturing facility where an OS and diversified data can be provided to the secure element by means of the security program dataset and corresponding diversification program dataset, while leaving an option of accumulating stock and provision other, less restricted, sets of data, e.g., for some IoT devices, at later production stages, such as for just-in-time delivery. It is even conceivable to provide blank and semi-blank secure elements in order to maximize flexibly and enable a decentralized distribution of the secure elements and/or respective user devices.

The proposed solution has the advantage over the prior art, that secure elements and HSM can be delivered to any manufacturing facility, including OEM/ODM vendor facilities, and fabrication facilities of the secure element, regardless of a change to standards and/or specifications relating to the user device between the delivery and a later point of the time of deployment of user devices and/or the secure elements to customers. Secure elements, their OS and/or diversified data can be handled in a way that a future-proof functional spectrum, safety and security may be assured, while not compromising their deployability and availability. Data objects can be provided to secure elements in a way, that on the one hand, their personalization can be carried out at remote premises or by third parties, for example, for in factory profile provisioning (IFPP), while on the other hand, a required level of control by trusted entities and/or standardization bodies over the personalization process is maintained.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to an embodiment, the transformation operations comprise at least one of an encrypting operation, a decrypting operation, a signing operation, a verifying operation, a wrapping operation, an unwrapping operation, or a deriving operation. Such operations can be involved in any data provisioning application to be performed on secure elements and can be combined with each other and arranged as required or desired in the respective transformation sequence which can be executed by use of the respective sequence key. This further helps in providing data objects to secure elements in a way, that on the one hand, their personalization can be carried out at remote premises or by third parties, while on the other hand, a required level of control by trusted entities and/or standardization bodies over the personalization process is maintained, in particular, in that the transformation sequence can be carried out according to a respective security level.

According to an embodiment, the data elements and/or the data objects contain diversified data. Such diversified data can be any data relating to a human entity, machine entity, or alike, allowing for an unequivocal identification of that entity. Since such diversified data can be highly sensitive and therefore require an appropriate level of data protection, enabling to handle such data by means of the sequence key at the transformation sequence can additionally help helps in providing data objects to secure elements in a way, that on the one hand, their personalization can be carried out at remote premises or by third parties, while on the other hand, a required level of control by trusted entities and/or standardization bodies over the personalization process is maintained, in particular, in that data protection requirements are being met.

According to an embodiment, the diversified data contains at least one security credential. Such security credentials may enable to access, encrypt, and/or decrypt data elements, data objects and/or transformation operations. The security credentials may have a security level that does not allow them to be accessed, such as read, displayed, copied, transferred, or alike, by any unauthorized party, such as noncertified party, or alike. By contrast, there should be only accessible by certified parties, such as trusted entities. Hence, by only allowing the security credentials to be handled by means of the transformation sequence and a respective sequence key enables to keep them concealed and protect them from unauthorized access.

According to an embodiment, the diversified data comprises at least one object identifier, security key and/or authentication certificate. Such an object identifier, security key, and/or authentication certificate can be combined with each other, and linked with the respective data object to secure access to that data object. This further helps in maintaining a desired security level.

According to an embodiment, at least some of the data elements are being received from the trusted entity. The trusted entity can prepare the data elements in a manner that they can be used to compute the data objects based on the transformation sequence. For example, the data elements can be provided in the form of a data batch which can be encrypted. This facilitates concealing any sensitive data, such as the diversified data, and further helps in preventing unauthorized access to the data.

According to an embodiment, the commencing with the transformation sequence is being enabled by entering a security code. The security code can be provided in the form of a pin code. Thereby, for example, any party or entity having direct physical control over a server containing a respective HSM, can trigger the transformation sequence by means of the security code. This facilitates an application of the transformation sequence and helps in maintaining a desired security level.

According to an embodiment, the data input has an input format and/or the data output has an output format defined by the trusted entity and/or by a standardization body. Such data formats and/or a secure data interface for accessing the secure element may be configured according to respective security standards, such as standards identified by the GSMA, GlobalPlatform (GP), or alike. Thereby, the transformation sequence in connection with the sequence key may enable to perform the transformation operations in a manner of a so-called black box, with certified data inputs and/or certified data outputs, as desired and required. This additionally helps in in providing data objects to secure elements in a way, that on the one hand, their personalization can be carried out at remote premises or by third parties, while on the other hand, a required level of control by trusted entities and/or standardization bodies over the personalization process is maintained, in particular, in that data protection requirements are being met.

According to an embodiment, the data objects comprise application program datasets, operating system datasets and/or user profile datasets. The HSM and/or the server device can thereby be enabled to manage application program datasets, operating system datasets, and/or user profile datasets for secure elements, such as eUICCs, of user devices. Thereby, in particular IFPP is further facilitated while maintaining required data protection levels.

According to an embodiment, the data objects comprise update datasets for updating application program datasets, operating system datasets and/or user profile datasets to be stored in the secure elements. Such update datasets and/or respective data elements, and which they are based, can therefore be provided to the HSM which can be located at premises of an entity requiring to provide the update datasets to secure elements of user devices which are already deployed to users or in in use, for example, in that they are fielded. The respective entity may provide the update datasets to the user devices or offer them for download by the user devices as desired or required. This further helps in that secure elements and their data components can be handled in a way that a future-proof functional spectrum, safety and security may be assured, while not compromising their deployability and availability.

According to an alternative or additional solution, a of transforming data objects for configuring secure elements, such as eUICCs, of user devices intended to be issued to users and allowing secure accesses in-volving a trusted entity, in particular for accessing telecommunication networks, the method comprising the steps of providing a hardware security module for a server device configured to transform a data input of data elements to a data output of data objects configured to operate the secure elements; and providing a trust chain dataset for managing a data batch of the data elements, the data objects and/or transformation operations performed on the data elements in the course of generating the data objects.

The trust chain dataset can help to avoid mishandling or manipulating the data batch in an accidental and/or unauthorized manner. For instance, prohibited copying or cloning of data elements and/or data objects can be prevented. The trusted instance may issue the trust chain dataset based on respective certifications to second or third parties which do not need to be necessarily fulfil respective certifications themselves, but can rely on handling the data batch, data elements and/or data objects in a certified manner at their own premises. For signing and/or encrypting the trust chain dataset, a designated key, in particular a sequence key, for example in the form of an attributeless key, can be used.

According to an embodiment, the trust chain dataset comprises a batch identifier for identifying the data batch, element identifiers for identifying the data elements and/or object identifiers for identifying the data objects. In other words, each of the data components involved can be provided with its own identifier. This facilitates managing and handling the data batch, data elements and fish data objects with the trust chain dataset.

According to an embodiment, the trust chain dataset is being signed by a sequence key. The sequence key can be provided to perform multiple functions. Signing the trust chain dataset with the sequence key helps in verifying and/or authenticating trust chain dataset.

According to an embodiment, the data batch is being signed by a batch key. The batch key can be used in addition to the sequence key. For example, the batch may be protected by encryption for any transfer between parties and entities involved.

According to an embodiment, the trust chain dataset and/or the data batch is or are, respectively, at least partly being encrypted for storage and/or decrypted for use. Preferably, the trust chain dataset and/or the data batch are stored in the hardware security module in an encrypted manner, such that they cannot be easily extracted from the hardware security module by accessing the hardware security module. The trust chain dataset and/or the data batch can then only be decrypted within the hardware security module, for example, within and/or by means of the security program dataset, when being in use/applied. This further helps in enhancing security of any data involved in the process.

According to an embodiment, the data elements, the data objects and/or the transformation operations on the data elements in the course of generating the data objects are being verified and/or authenticated before being used and/or transferred to a secure element, respectively. The trust chain and/or the data batch can comprise element identifiers, for example, in the form of profile identifiers of user profile datasets, such as subscriber profile or alike. The trust chain can therefore be used for performing bound package profile generation in a hardware security module. Performing bound package profile generation and hardware security module, for example, by means of the security program dataset, helps in keeping respective data concealed and protect them from unauthorized access.

According to an embodiment, the trust chain dataset is configured to unequivocally verify a current state and/or at least one immutable previous state of the trust chain dataset and/or the data batch. In other words, a previous state of the trust chain dataset and/or the data batch can always be determined. Thereby, it can be assessed whether the trust chain dataset and/or the data batch have or has, respectively, in manipulated or altered in an unauthorized manner.

According to an embodiment, after using the data elements, generating the data objects and/or performing the transformation operations on the data elements in the course of generating the data objects, the respective handling, generating and/or performing step is noted in the trust chain. The trust chain dataset can be regarded as being shortened by the respective item used and/or action performed, such as striking an item from a list. This enables to provide a form of an audit trail regarding the application, state and/or use of the trust chain dataset and/or the data batch, and thus further helps in determining a previous state of the trust chain dataset and/or the data batch. It can be easily assessed whether the trust chain dataset and/or the data batch have or has, respectively, in manipulated or altered in an unauthorized manner.

According to an embodiment, the trust chain dataset and/or the data batch are being at least in part received from and/or returned to the trusted entity. Receiving the trust chain dataset and/or the data batch from the trusted entity helps in assuring integrity and authenticity of the data held therein. Returning the trust chain dataset and/or the data batch to the trusted entity helps in monitoring the application, state and/or use of the trust chain dataset and/or the data batch, and thus to prevent data misuse and/or failures.

According to an embodiment it can be provided that when a failure occurs when using the data elements, generating the data objects and/or performing the transformation operations on the data elements in the course of generating the data objects, the entire handling, generating and/or performing procedure is being aborted. Such a step of aborting and/or cancelling the procedure and the respective step performed can be carried out at any stage of the entire process of handling the data involved, including every single transformation operation. This helps in preventing unauthorized data access and forced data permutations.

### Brief Description of the Drawings

- Fig. 1: is a schematic illustration of an embodiment of a computing device as a part of a configuration system with a hardware security module configured for providing data objects for secure elements of user devices.
- Fig. 2: is a schematic illustration of an embodiment of a configuration system for configuring user devices involving the installation program and the data component for the secure elements of the user devices.
- Fig. 3: is a schematic illustration of possible steps of a method for performing transformation operations on data elements in order to provide data objects to secure elements.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

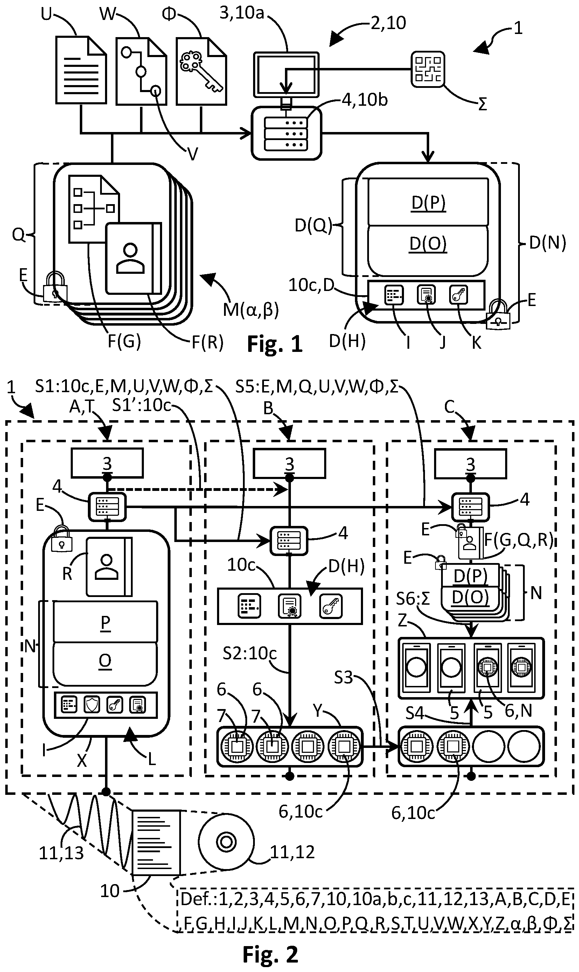

Fig. 1 shows a schematic illustration of a configuration system 1 comprising a computer device 2, for instance a server device 3, comprising a hardware security module 4 and data transmission lines (not shown) adapted to manage and transfer, respectively, data for configuring user devices 5 (see Fig. 2), for example, in the form of a personal mobile device, such as a smart phone, smartwatch, etc., to be associated with a personal entity, and/or in the form of an Internet of Things (IoT) device, such as a multimedia device, camera, speaker, household appliance, vehicle, vending machine, or alike, to be associated with a machine entity, respectively. In the present example, the user devices 5 may be adapted for communication via a telecommunication network (not shown) by means of at least one user profile dataset P to be saved in a respective secure element 6, such as an UICC, eUICC, iUICC, SIM, eSIM, iSIM, SE, eSE, or alike, provided in the form of a computer chip (see Fig. 2).

The user profile data sets P are generated based on respective personal records R and/or administrative data G contained in data elements F, for example in the form of data files on the computer device 2, in particular, the hardware security module 4 thereof. The data elements F with the personal records R can be viewed as diversified data Q. The administrative data can be viewed as static and/or system data, such as certain data structures, possibly including security credentials H or serving to administer, create and/or handle security credentials H. Each user profile dataset P may contain at least a part of a respective personal record R. The user profile dataset P has to be stored on the secure element 6. For storing and managing user profile data sets P on the secure elements 6, and operating system dataset O has to be installed on the secure elements 6. The security credentials H, user profile dataset P and the operating system dataset O can each constitute a data object D and/or can in combination be viewed as a data object D.

A configuration program 10 can be provided in the form of a computer program which may comprise respective program modules and may be distributed and/or combined in a manner that it allows operation in such a configuration of the configuration system 1 and its components. The configuration program 10 can comprise a server program dataset 10a, a security program dataset 10b and/or an installation program dataset 10c. The server program dataset 10a can comprise computer-readable instructions for operating and/or configuring the server device 3. The security program dataset 10b can comprise computer-readable instructions for operating and/or configuring the hardware security module 4, for instance, in conjunction with the server device 3.

The installation program dataset 10c can be provided for installing any of the data objects D or data components N, for example, in the form of packages combining the data objects D and/or constituting a data object D themselves, on the secure element 6. The installation program dataset 10c can comprise a basic operating system for the secure elements 6. The basic operating system can be regarded as a mini operating system, boot loader, or alike, helping to install the data objects D and/or data components N on the secure elements 6, for example, in providing a basic framework and/or functions which allow to address a storage area 7 of the secure elements 6 (see Fig. 2).

Additionally, the installation program dataset 10c can comprise the security credentials H, such as element identifiers I, authentication certificates J, and/or security keys K. The security credentials H may comprise any kind of credentials defined by e.g., the GSMA, or alike. The security keys K may comprise any kind of cryptographic code or key element which may be adapted to interact with the user devices 5, the secure elements 6, to verify and/or authenticate an issuer of any part of the data objects D, data elements F, and/or data components.

The authentication certificates J may be any kind of electronic certificate, for example, that can be issued by the trusted entity T, for authenticating an origin of the devices 5, the secure elements 6, the installation program dataset 10c and/or the data component N.

The data objects D, data elements F, administrative data G, security credentials H, data components N, the diversified data Q, security program dataset 10b and/or installation program dataset 10c can be handled by the computing device 2, in particular in the hardware security module 4, in a protected and/or secured storage, for example, combined as a data batch M, separately from other data and file structures used by the server device 3 for operation, such as the server program dataset 10a. The data objects D, data elements F, administrative data G, security credentials H, data batch M, data components N, the diversified data Q, security program dataset 10b and/or installation program dataset 10c can may be protected against unauthorized access by respective encryption measures E. The transmission lines handling and/or transferring the data may comprise any kind of wired and/or wireless transmission chains, including the Internet (for transmissions "Over-The-Air") as well as other physical and/or non-physical data carriers, which can be configured and secured as desired and required.

For handling and/or generating any of the data objects D, data elements F, administrative data G, security credentials H, data batch M, data components N, the diversified data Q, security program dataset 10b and/or installation program dataset 10c, trusted entity T (see Fig. 2) may administer, define, generate and/or provide trust chain datasets U, transformation operations V, a transformation sequences W, security codes Σ, and/or sequence keys Φ. For example, the trust chain dataset U can comprise at least one list or table for managing and administering data objects D, data elements F, administrative data G, security credentials H, data batch M, data components N, the diversified data Q, security program dataset 10b and/or installation program dataset 10c, along with the transformation operations V, a transformation sequences W, security codes Σ, and/or sequence keys Φ. The transformation operations V can be performed in the hardware security module 4 on the data elements F and/or respective diversified data F to generate the data objects D, for example, in the form of data components N to be stored in the secure elements 6 (see Fig. 2), for example, in conjunction with the security credentials H.

Each transformation sequence W may comprise multiple transformation operations V, such as Encrypt, Decrypt, Sign, Verify, Wrap, Unwrap and Derive, etc. The respective sequence keys Φ can allow to decrypt, encrypt, sign and/or execute the transformation sequence W. The security code Σ can allow to use and/or apply the sequence key Φ to its designated data batch M, for example, to carry out the transformation sequence W with respect to data elements E contained in the data batch M. For example, the security code Σ can be provided separately of any other data components, for example, in a nonelectronic form, such as in a paper letter format, to an entity intended for applying the security code Σ.

Fig. 2 shows a schematic illustration of an embodiment of a configuration system 1 for configuring the user devices 5, in particular, for personalizing the secure elements 6 thereof. A respective method for configuring the user devices 5 and/or secure elements 6 may have several steps S which may be carried out by and/or with the help of the configuration program 10 and its respective components. In the present example, the configuration system 1 and respective method involve a data facility A serving as the trusted entity T, a fabrication facility B fabricating the secure elements 6, and a manufacturing facility C manufacturing the user devices 5, each having a server device 3 and a respective hardware security module 4. The data facility A, the fabrication facility B and/or the manufacturing facility C may be combined separately of each other, in conjunction and/or respective premises as desired or required.

According to the present exemplary embodiment, at the data facility A, the installation program dataset 10c, data elements E, data objects D and/or the data component N may be kept along with the respective personalization data R in a latent data composition L in a in data provision stage X, for example, at the respective computer device 2, in particular, at the hardware security module 4 thereof. In the data provision stage X, all data in the latent data composition L can be kept up-to-date to be provided to the fabrication facility B and/or the manufacturing facility C as required in the respective fabrication stage Y and/or manufacturing stage Z, respectively, for configuring the user devices 5 and/or secure elements 6. Alternatively, or additionally, the fabrication stage Y/or the manufacturing stage Z may be situated at and/or combined with the data facility A as desired or required. The latent data composition L may be protected by respective encryption measures E.

In a first step S1, the installation program dataset 10c may be provided from the data facility A to the fabrication facility B via respective transmission lines, for example in the form of a respective data batch M along with the transformation operations V, a transformation sequences W, security codes Σ, and/or sequence keys Φ. Alternatively, or additionally, hardware security module 4 and/or security program dataset 10b therefore may be delivered separately, for example, in a physical manner, by authorized personnel of the trusted entity T. Depending on respective security requirements, the installation program dataset 10c may be provided from and/or to the hardware security module 4 of the corresponding computing device 2 of the data facility A and/or fabrication facility B, respectively. Hence, it indicated in Fig. 2 that in the first step S1, the installation program dataset 10c can be provided via the hardware security modules 4 of the data facility A and the fabrication facility B, in particular, if the installation program dataset 10c contains the security credentials H, the security keys K and/or the authentication certificates J, which may require a respective level of protection.

In such case, transformation operations V can be performed in the hardware security module 4 of the fabrication facility B on the data elements F and/or respective diversified data F to generate the data objects D, for example, in the form of data components N to be stored in the secure elements 6, for example, in the form of the installation program dataset 10c in conjunction with the security credentials H. The respective sequence keys Φ then allow to decrypt, encrypt, sign and/or execute the transformation sequence W. The security code Σ can enables the fabrication facility B to use and/or apply the sequence key Φ to its designated data batch M, for example, to carry out the transformation sequence W with respect to data elements E contained in the data batch M.

In an alternative or additional first step S1', the installation program dataset 10c is provided from the computing device 2 of the data facility A to the computing device 2 of the fabrication facility B, possibly without involving the hardware security module 4 on either side, in particular, if the installation program dataset 10c merely contains the basic operating system and/or if the basic operating system is provided separately from the security credentials H, the security keys K and/or the authentication certificates J, and is regarded as requiring a lower degree security as the beforementioned. This option can be also chosen if the fabrication facility B itself certified as a trusted entity T. Nevertheless, the encryption measure E should be applied to the installation program dataset 10c at least for the data transfer from the data facility A to the fabrication facility B.

In a second step S2, the installation program dataset 10c can be mounted on the secure elements 6 fabricated at the fabrication facility B, for example, by storing the installation program dataset 10c in the storage area 7 of the secure elements 6 in the fabrication stage Y. Thereby, the secure elements 6 can be enabled and/or prepared to be provided with any of the data objects D and/or data components N. In a third step S3, the secure elements 6 can be provided from fabrication stage Y at the fabrication facility B to the manufacturing stage Z at the manufacturing facility C. For example, batches of the secure elements 6 having installed thereon the installation program dataset 10c in a version relating to the respective latent data composition L may be delivered to the manufacturing facility C.

At the manufacturing facility C, the user devices 5 can be provided with the secure elements 6, for example, in the form of an UICC, eUICC, iUICC, SIM, eSIM, iSIM, SE, or eSE. In a fourth step S4, at least one of the secure elements 6 containing the installation program dataset 10c can be installed in the designated user device 5 at the manufacturing stage Z. In a fifth step S5, the data elements F, such as the diversified data Q, may be provided from the data facility A to the fabrication facility B via respective transmission lines, for example in the form of a respective data batch M along with the transformation operations V, a transformation sequences W, security codes Σ, and/or sequence keys Φ. Alternatively, or additionally, hardware security module 4 and/or security program dataset 10b therefore may be delivered separately, for example, in a physical manner, by authorized personnel of the trusted entity T. As such a data batch M contains or is at least based on or provided along with the personalization data R, the data batch M should be preferably sent from the computing device 2 of the data facility A to the computing device of the manufacturing facility B via the respective hardware security modules 4 and/or secured by respective encryption measures E.

In a sixth step S6, the secure elements 6 of the user devices 6 can then be provided with their intended data objects D and/or data components N, which may be associated to the respective user device 5 and/or secure element 6 with the help of the element identifiers I and/or personalization data R, for example, enabling communication via the telecommunication network associated with a respective MNO. The user profile dataset P may stem from the respective latent data composition L intended to be provided for the user devices 5 which can have a later version date then the installation program dataset 10c mounted on the secure elements 6 at the fabrication stage Y at an earlier point of time. At the manufacturing facility C, the sixth step S6 may be carried out by applying the respective security code Σ enabling the manufacturing facility C to use and/or apply the sequence key Φ to its designated data batch M, for example, to carry out the transformation sequence W with respect to data elements E contained in the data batch M in order to provide the data objects D and/or data components N to be installed in the user device 5 and/or secure elements 6.

According to the present exemplary embodiments, the installation program dataset 10c, such as an OFL component, can be individualized and/or shared amongst several possibly different operating system datasets O and may be the only component that is never updated once installed in the respective secure element 6. Usually from one deployment to another, the only change can be a personalization of the installation program dataset 10c, for example, with specific security credentials H to avoid that one update of the data component N dedicated for a specific recipient, such as a customer, of the user devices 5 can be deployed to another recipient. This concept allows the configuration and/or personalization of the installation program dataset 10c along with at least some of the security credentials H and possibly diversified data Q (e.g., GSMA keys and certificates). Therefore, the data component N may not be configured together with the installation program dataset 10c. Having the possibility to configure at least some of the diversification data D including GSMA credentials in the installation program (or alternatively in the basic operating system M), allows for instance to keep the GSMA keys and certificates in the data facility A at the premises of a respective trusted entity T, which can be certified accordingly for the retention and/or management of the security credentials H.

Individual and/or identical data objects D and/or data components N, for example, provided as respective data images, can be used for the secure elements 6. The respective data image can be generated and/or prepared according to the latent data composition L at the data facility A along with all the necessary diversified data Q (i.e., OFL keys, OFL personalization, SD keys, GSMA credentials, EID, ...). Production images of the data component N, for example, using a respective chip vendor format, determined by the manufacturing facility C including the diversification data can be securely created at the manufacturing facility C for manufacturing the user devices 5 by applying the transformation operations V to the data elements F, for example, in the form of a transformation sequence W managed with the help of the trust chain dataset U, and protected by the sequence key Φ. In a similar manner, the installation program dataset 10c can be provided, for example as an OFL image, to the respective fabrication facility B. After using the data elements F, generating the data objects D, composing the data components N, and/or performing the transformation operations V on the data elements E, the respective handling, generating and/or performing step can be noted in the trust chain dataset U which can then again be signed by means of the sequence key Φ in order to allow to unequivocally verify a current state and/or at least one immutable previous state of the trust chain dataset U and/or the data batch M.

The secure elements 6 fabricated in the fabrication facility B can be personalized by means of the installation program dataset 10c at the fabrication facility B in order to be then delivered to the manufacturing facility C, for example, in the form of chips having an OFL personalized (and optionally simple standard OS) that are sent to OEM/ODM facilities for final production. With a first reset of the user devices 5 and/or their secure elements 6 after the manufacturing stage Z, for example by means of a respective recovery mechanism used during an OS Update process, diversified keys (i.e., GSMA keys, certificates, etc.) can be restored into the new operation system dataset O, for instance, provided in the form of an eOS. Respective scripts can be included to diversify security keys K provided with the installation program dataset 10c from one customer to another. In that way, exactly the same installation program dataset 10c can be provided as an original image in order to be reused among different customers. For instance, a first command, to be carried out by respective user devices 5 and/or secure elements 6 a respective personalized operation system dataset O, such as a specific customer OS, can include an upgrade of the security keys K provided for that customer by the data facility

In any of the embodiments of the configuration system 1 as described herein, in particular the computing device 2, the server device 3, and/or the hardware security module 4 can be configured to execute the configuration program 10, server program dataset 10a, security program dataset 10b and/or installation program dataset 10c. A computer-readable data carrier 11 can have stored thereon the at least of said components of the configuration program 10 and may take the form of a computer-readable medium 12 and/or data carrier signal 13. When carrying out the configuration program 10, the configuration system 1 and any components thereof communicate as specified in the configuration program 10. Parameters associated with and/or underlying the configuration system 1, any of the components thereof and/or any of the steps S carried out thereby, can be defined in and/or by the configuration program 10.

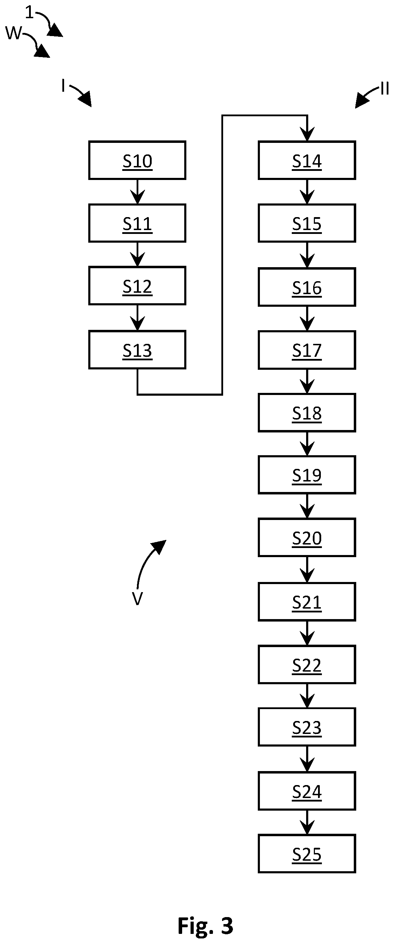

Fig. 3 shows a schematic illustration of possible steps S of a method for performing transformation operations V on data elements E in order to provide data objects D to secure elements 6. According to the present exemplary embodiment, By using two sequence keys Φ, one for decrypting the data batch M, such as by Batch Bound Profile Package (BPP) decryption, and one for self-signature generation/ verification of the trust chain dataset U, respective data objects D and/or data components N can be prepared by the server device 3, for example, an SM-DP+/SM-DPf, and the respective hybrid security module 4 using the security program dataset 10b, for instance, in the form of an HSM custom firmware module.

For example, the trust chain dataset U can contain:
- A data signature α over previous data, such as the data batch M and/or trust chain dataset U in any previous state.
- An identifying element that can be used as a batch identifier β identifying the data batch M (see Fig. 1).
- A list of element identifiers I, for example, profile identifiers (i.e.: ICCIDs).

A corresponding new data package on the SM-DP+/SM-DPf can have properties as defined in SGP.22, for example, although a respective binding key can be provided in the form of the sequence key Φ that can be used as a batch key instead of an eUICC key.

The installation program dataset 10c, for example, in the form of the HSM custom firmware module, can then perform the following steps S10 to S25 which may be triggered by means of the security code Σ and can be executed as a transformation sequence W involving respective transformation operations V:
- Initial import I:
   10. Receive the trust chain dataset U from the server device 3, for example, in the form of a respective remote server, from the trusted entity T.
   11. Verify the data signature α with a key used between remote server and the HSM.
   12. Generate a new data signature α, for example in the form of a self-signature from the HSM using the sequence key Φ, such as an attributeless key/internal key, not available for external cryptographic operations.
   13. Store into the security program dataset 10b a struct with the batch identifier β and the new self-signature.
- Bound Package Profile Generation II:
   14. Receive inputs in the form of the trust chain dataset, the data batch M, security credentials H, such as EUM certificates signed by Certificate Issuer (e.g., GSMA), and a certificate containing the One Time Key for that eUICC signed by EUM (e.g. by eUICC Manufacturer).
   15. Verify the trust chain dataset U signature with the sequence key Φ.
   16. By using the SGP CI, verify the EUM Certificate.
   17. By using the EUM Certificate, verify the EUICC Certificate.
   18. Extract the public key from the eUICC Certificate.
   19. Follow SGP.22 to generate Batch BPP session keys based on the Batch private key, then decrypt and verify Configure ISDP, Store Metadata and Protected Profile Protection keys (e.g., only present in a decrypted state inside the security program dataset 10c).
   20. Verify that the element identifier I, such as the respective profile identifier (i.e.: ICCID) present in the Store Metadata package is present in the list of identifiers contained in the trust chain dataset U.
   21. Protect the Configure ISDP, Store Metadata and Protected Profile Protection keys by using the eUICC public key which will generate an individualized BPP.
   22. Remove the profile identifier of the selected profile from the trust chain dataset U.
   23. Sign the trust chain dataset U again and update the internal status with the new data signature α.
   24. Return the new data batch M and/or trust chain dataset U to the trusted entity T.
   25. Abort the process immediately upon any failure and/or inconsistency in above-mentioned steps S10 to S24.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: configuration system
- 2: computing device
- 3: server device
- 4: hardware security module / safe storage
- 5: user device
- 6: secure element
- 7: storage area / non-volatile memory

- 10: configuration / computer program
- 10a: server program dataset
- 10b: security program dataset
- 10c: installation program dataset
- 11: computer-readable data carrier
- 12: computer-readable medium
- 13: data carrier signal

- A: data facility / data provider / EUM factory
- B: fabrication facility / chip vendor factory
- C: manufacturing facility / OEM and/or ODM factory
- D: data object
- E: encryption measures
- F: data element / file
- G: administrative / static /system data60
- H: security credentials
- I: element identifier / identifying element
- J: authentication certificate
- K: security key
- L: latent data composition
- M: data batch / bulk
- N: data component /package
- O: operation system dataset
- P: user profile dataset / subscriber profile
- Q: diversified data
- R: personalization data / record
- S: step
- T: trusted entity
- U: trust chain dataset
- V: transformation operation
- W: transformation sequence
- X: data provision state
- Y: fabrication stage
- Z: manufacturing stage

- α: data signature / batch key
- β: batch identifier
- Σ: security code
- Φ: sequence key / chain key

- S1: provide installation program
- S2: mount installation program
- S3: provide secure elements
- S4: install secure element
- S5: provide data component
- S6: personalise user device

- S10: Receive trust chain dataset
- S11: Verify data signature
- S12: Generate new data signature
- S13: Store struct
- S14: Receive inputs
- S15: Verify trust chain dataset
- S16: Verify EUM Certificate
- S17: verify EUICC Certificate
- S18: Extract public
- S19: Generate Batch session keys
- S20: Verify presence of element identifier
- S21: Protect Configure ISDP, Store Metadata and Protected Profile Protection keys
- S22: Remove profile identifier
- S23: Sign trust chain dataset
- S24: Return the new data batch and/or trust chain dataset
- S25: Abort process upon failure

## Claims

1. Method of transforming data objects (D) for configuring secure elements (6), such as eUICCs, of user devices (5) intended to be issued to users and allowing secure accesses involving a trusted entity (T), in particular for accessing telecommunication networks, the method comprising the steps of
providing a hardware security module (3) for a server device (3) configured to transform a data input of data elements (F) to a data output of data objects (D) configured to operate the secure elements (6); and
providing a sequence key (Φ) configured to allow execution of a transformation sequence (W) in the hardware security module (4),
wherein the transformation sequence (W) comprises at least two transformation operations (V) performed on the data elements (F) in the course of generating the data objects (D).

2. Method according to claim 1, wherein the transformation operations (V) comprise at least one of an encrypting operation, a decrypting operation, a signing operation, a verifying operation, a wrapping operation, an unwrapping operation, and/or a deriving operation.

3. Method according to claim 1 or 2, wherein the data elements (F) and/or the data objects (D) contain diversified data (Q).

4. Method according to claim 3, wherein the diversified data (L) contains at least one security credential (H).

5. Method according to claims 3 or 4, wherein the diversified data (L) comprises at least one object identifier (N), security key (K), and/or authentication certificate (M).

6. Method according to at least one of claims 1 to 5, wherein at least some of the data elements (F) are being received from the trusted entity (T).

7. Method according to at least one of claims 1 to 6, wherein commencing with the transformation sequence (W) is being enabled by entering a security code (Σ).

8. Method according to at least one of claims 1 to 7, wherein the data input has an input format and/or the data output has an output format defined by the trusted entity (T) and/or by a standardisation body.

9. Method according to at least one of claims 1 to 8, wherein the data objects (D) comprise application program datasets, operating system datasets (O) and/or user profile datasets (P).

10. Method according to at least one of claims 1 to 9, wherein the data objects (D) comprise update datasets for updating application program datasets, operating system datasets (O) and/or user profile datasets (P) to be stored in the secure elements (6).

11. Configuration program (10) for configuring secure elements (6) of user devices (5), in particular for secure operation involving a trusted entity (T), wherein the configuration program (10) comprises instructions which, when the configuration program (10) is executed by a server device (3), cause the server device (3) to carry out a method according to at least one of claims 1 to 10.

12. Security program dataset (10c) for a hardware security module (4) of a server device (3), in particular a security server providing a secure location for allowing secure operations involving a trusted entity (T), comprising a at least parts of a configuration program (10) according to claim 11 and/or configured to carry out method according to at least one of claims 1 to 10.

13. Computer-readable data carrier (11, 12, 13) having stored thereon a configuration program (10) according to claim 11 and/or a security program dataset (10c) according to claim 12.

14. Hardware security module (4) for a server device (3), in particular a security server providing a secure location for allowing secure operations involving a trusted entity (T), wherein the hardware security module (4) is configured to carry out a method according to at least one of claims 1 to 10, comprises a configuration program (10) according to claim 11, a security program dataset (10c) according to claim 12 and/or a computer-readable data carrier (11, 12, 13) according to claim 13.

15. Server device (3), such as a security server providing a secure location, in particular for allowing secure operations involving a trusted entity (T), wherein the server device (3) is configured to carry out a method according to at least one of claims 1 to 10, comprises a configuration program (10) according to claim 11, a security program dataset (10c) according to claim 12, computer-readable data carrier (11, 12, 13) according to claim 13, and/or a hardware security module (4) according to claim 14.
